# NEUE EUROPÄISCHE PATENTSCHRIFT

(11) **EP 2 079 627 B3**
(45) Veröffentlichungstag dieser Patentschrift: **03.09.2014**
(45) Hinweis auf die Patenterteilung: 24.02.2010
(21) Anmeldenummer: 08749226.0
(22) Anmeldetag: 29.04.2008
(51) Int. Cl.: B62D 53/08, B60D 1/32

(54) **KUPPLUNGSVORRICHTUNG**
COUPLING APPARATUS
DISPOSITIF D'ACCOUPLEMENT

(30) Priorität: 03.05.2007 DE 102007020770
(43) Veröffentlichungstag der Anmeldung: 22.07.2009
(73) Patentinhaber: Pintsch Bubenzer GmbH, 57548 Kirchen-Wehbach (DE)
(72) Erfinder: TREUDE, Hans-Walter, 57234 Wilnsdorf (DE); SCHNEIDER, Andreas, 57462 Olpe (DE); TOPP, Markus, 51888 Nümbrecht (DE)
(74) Vertreter: MFG Patentanwälte Meyer-Wildhagen Meggle-Freund Gerhard PartG mbB
(86) Internationale Anmeldenummer: PCT/EP2008/003470
(87) Internationale Veröffentlichungsnummer: WO 2008/135204

(56) Entgegenhaltungen:
- EP-A- 1 498 292
- DE-A1-102006 047 456
- US-A- 4 065 149

## Beschreibung

Die vorliegende Erfindung betrifft eine Kupplungsvorrichtung zur drehgelenkigen Kopplung von zwei Fahrzeugabschnitten, wobei zwei schwenkbar zueinander angeordnete Kupplungselemente vorgesehen sind, die jeweils fest mit einem Fahrzeugabschnitt koppelbar sind, und eine Bremsanordnung zwischen den Kupplungselementen wirkt, um einen einstellbaren Reibschluss zwischen den Kupplungselementen herzustellen und so die Schwenkbarkeit der Fahrzeugabschnitte zueinander zu hemmen.

Solche Konzepte für entsprechende Kupplungsvorrichtungen sind im Nutzfahrzeugbereich bekannt. Insbesondere für die Kopplung einer Zugmaschine mit einem Sattelauflieger sind vielfältigc Überlegungen angestellt worden.

Üblicherweise wird ein Sattelauflieger über seinen Königszapfen mit der an der Zugmaschine angeordneten Sattelkupplung verbunden. Die Sattelkupplung (auch "Fifth Wheel" genannt) besteht aus einer Kupplungsplatte mit einer Ausnehmung, in die der Königszapfen eingeführt wird und dort über ein Schlossstück drehbar verriegelt wird. Die Oberfläche der Kupplungsplatte definiert die Schwenkebene zwischen Zugmaschine und Sattelauflieger und dient gleichzeitig als Reiblager, auf der sich eine den Königszapfen umgebende ebene Platte des Sattelaufliegers gleitend verdrehen kann. Zugmaschine und Auflieger sind über dieses Sattelgelenk gelenkig miteinander verbunden. Bei bestimmten Fahrzuständen, insbesondere bei Bremsmanövern während enger Kurvenfahrten kann es zum gefürchteten Klappmessereffekt kommen, bei dem Zugmaschine und Auflieger um das Sattelgelenk maximal zueinander verschwenken, so dass das gesamte Fahrzeug unkontrollierbar wird. In anderen Fahrzuständen kann es auch zu einem unkontrollierten Pendeln zwischen Zugmaschine und Auflieger kommen. Ähnliche Probleme treten auch bei Gelenkbussen, LKW-Anhängern und gelenkig miteinander verbundenen Fahrzeugabschnitten von Schienenfahrzeugen auf.

Die bekannten Konzepte gehen im Prinzip davon aus, über eine mehr oder weniger stark dämpfende Brems- bzw. Dämpfungsvorrichtung das Sattelgelenk über Bremsanordnungen zu versteifen:
US 3,231,295 schlägt beispielsweise eine im Auflieger drehbar angeordnete Königszapfenanordnung vor, die über eine Bremstrommel und eine gemeinsam mit dem Bremssystem des Fahrzeugs betätigbare Umschlingungsbremse bremsbar ist. Die Betätigung erfolgt hier über ein mit der Fahrzeugbremsanlage gekoppeltes Gestänge. Das Konzept gemäß US 4,065,149 sieht eine um eine vertikale Achse drehbar gelagerte Sattelplatte an der Zugmaschine vor, die über einen Königszapfen mit ovalcm Querschnitt drchfest mit dem Auflieger koppelbar ist. Die Drehung der Sattelplatte kann über eine innenliegende pneumatisch betätigte Trommelbremse gehemmt werden. Auch hier kann die Betätigung über das Bremssystem des Fahrzeugs erfolgen. Aus der GB 2 365 398 ist ein zwischen Zugmaschine und Auflieger geschaltetes Dämpfungssystem vorgesehen, welches den Klappmessercffckt verhindern soll. Dazu ist hier ein Hydraulikdämpferelement vorgesehen, dessen Widerstand über das öffnen und Schließen von Ausgleichsleitungen einstellbar ist. Die Dämpfung kann auch viskoelektrisch bzw. viskomagnetisch erfolgen. Die Dämpfung kann in Abhängigkeit vom Winkel der Fahrzeugabschnitte zueinander bzw. von der Bremswirkung der Fahrzeugbremse gesteuert werden. Ein weiteres Konzept ist aus der US 5,690,347 bekannt, bei dem die Bremsvorrichtung mit Bremselementen arbeitet, die direkt zwischen Zugmaschine und Auflieger wirken und als exzentrisch wirkende Bremswalzen ausgebildet sind. Weitere ähnliche Konzepte sind z. B. aus GB 1 205 314, US 2005/0212256 A1 und DE 29 49 933 A1 bekannt.

Eine gattungsgemäßc Kupplungsvorrichtung ist im Dokument EP-A-1498292 offenbart.

Die Anforderungen an eine wirksame Kupplungsvorrichtung sind gegenläufig: Zum einen müssen enorme Bremsmomente realisierbar sein, um den Klappmessereffekt bei den hohen Fahrzeuggewichten, die im Nutzfahrzeugbereich üblich sind, zu verhindern, und zum andern ist eine kompakte und gewichtssparende Bauweise erforderlich, um wertvolles Ladevolumen bzw. Nutzlastkapazität zu erhalten. Die oben angegebenen Konzepte erfüllen diese Anforderungen zumindest nur teilsweise. Keines konnte sich im großen Stil in der Praxis durchsetzen. Eine weitere Anforderung bcsteht darin, dass sich eine bremsbare oder fixierbare Kupplungsvorrichtung in vorhandene genormte Schnittstellen integrieren lässt.

Davon ausgehend besteht die Aufgabe der vorliegenden Erfindung darin, eine verbesserte Kupplungsvorrichtung bereitzustellen, welche die oben formulierten Anforderungen besser erfüllt bzw. die bekannten Nachteile zumindest teilweise ausräumt.

Diese Aufgabe löst die Kupplungsvorrichtung gemäß Anspruch 1. Die Erfindung zeichnet sich dadurch aus, dass die Bremsvorrichtung eine Hydraulikzylindereinheit umfasst, welche auf mehrere radial wirkende Bremselemente wirkt. Diese Lösung erlaubt eine sehr kompakte Bauweise, und ist geeignet die notwendige Leistungsdichte sicherzustellen, die für die erforderliche Bremswirkung nötig ist. Der Einsatz einer Hydraulikzylindereinheit, die auf mehrere radial wirkende Bremselemente wirkt, erlaubt damit hohe Bremskräfte bei besonders kompakter Bauweise. Eine Steuerung kann den Arbeitsdruck auf der Grundlage einer oder mehrerer Steuer/Regelgrößen einstellen: zum Beispiel Fahrzeuggeschwindigkeit, Schwenkwinkel zwischen Fahrzeugabschnitten, Fahrzeuggewicht, Lenkeinschlag, Bremswirkung der Fahrzeugbremse. Entsprechend dieser Größen können fahrzeugspezifische Wirkungsprofile eingestellt werden. Gemäß Anspruch 2 wird dabei jedes Bremselement über mehrere Zylinder-/Kolbenelemente angetrieben; dadurch werden die Wirklasten besser auf die Bremselemente übertragen und die zur Verfügung stehenden, den eigentlichen Reibschluss bildenden Bremsflächen können optimal ausgenutzt werden. Lokale Schwankungen der Flächenpressung werden minimiert; die Wirksamkeit wird erhöht und der Verschleiß vermindert.

Gemäß Anspruch 3 ist ein einziger Zufuhranschluss vorgesehen. durch den die Hydraulikflüssigkeit über eine Verteilerleitung auf die entsprechenden Zylinderhohlräume verteilt wird. So ein System ist besonders leckagefest, leicht zu entlüften und betriebssicher. Gemäß Anspruch 4 ist die Hydraulikzylindereinheit einstückig ausgebildet und damit besonders kompakt und robust ausführbar. Gemäß Anspruch 5 sind vier senkrecht zueinander wirkende Bremselemente vorgesehen, die jeweils über wenigstens zwei Zylinder-/Kolbenelemente angetrieben werden, und so platzsparend innerhalb des verfügbaren Raums - zum Beispiel innerhalb einer ringförmigen Bremsfläche - untcrgebracht werden können.

Nach Anspruch 6 kann die hydraulische Wirkung über kraftverstärkende Koppelgetriebe zwischen den Zylinder-/Kolbenelementen und den Bremselementen verstärkt werden. Anspruch 7 betrifft dabei eine Weiterbildung, bei der das Getriebe als Koppelhebel ausgeführt ist, der durch die gelenkige Verbindung zwischen Zylinder-/Kolbenelement und Bremselement besonders einfach ausführ- und auslegbar ist.

Anspruch 8 betrifft eine besonders einfache Festlegung eines Kupplungselements über eine (genormte) Keilanordnung bezüglich einer (ebenfalls genormten) Sattelplatte einer Zugmaschine. Solche Keilanordnungen werden üblicherweise dazu verwendet, über die Schwenkstellung zwischen Auflieger und an der Zugmaschine fixierter Sattelplatte einen Lenkantrieb anzusteuern, der die nachlaufendcn Radsätze des Aufliegers bei Kurvenfahrten auslenkt.

Die Ansprüche 9 und 10 betreffen eine weiter Ausführung einer Kupplungsvorrichtung, die den Arbeitsdruck in der Hydraulikzylindereinheit zum Steuern/Regeln des Reibschlusses zwischen den Kupplungselementen verändern kann. Gemäß Anspruch 9 sind dazu entsprechende Sensoren zum Erfassen dieser Betriebsgrößen vorgesehen, die entsprechende Informationen an die Steuerung liefern. Zur Bedienung und zur Kontrolle kann die Steuerung mit einer Anzeigeeinrichtung und/oder einer Bedienungseinrichtung gekoppelt werden. Dies geschieht vorzugsweise über einen sogenannten CAN-Bus bzw. über einen anderen geeigneten Feldbus, der eine genormte Informationsübertragung zur und von der Steuerung ermöglicht.

Anspruch 11 betrifft ein Fahrzeug, insbesondere einen LKW, einen Bus oder ein Schienenfahrzeug mit einer Kupplungsvorrichtung nach einem der vorhergehenden Ansprüche.

Ein Ausführungsbeispiel der Erfindung wird nachfolgend anhand der Zeichnungen beschrieben, darin zeigen:
Fig. 1 eine Ansicht von unten einer erfindungsgemäßen Kupplungsvorrichtung,
Fig. 2 eine Ansicht von hinten der Kupplungsvorrichtung aus Fig. 1,
Fig. 3 eine Schnittansicht der Kupplungsvorrichtung aus Fig. 1 (Schnitt A-A in Fig. 6),
Fig. 4 eine Schnittansicht der Kupplungsvorrichtung aus Fig. 1 (Schnitt B-B),
Fig. 5 eine Explosionsdarstellung der Kupplungsvorrichtung aus Fig. 1,
Fig. 6 eine Ansicht von oben der Kupplungsvorrichtung aus Fig. 1,
Fig. 7 eine Darstellung in mehreren Ansichten und Schnitten eines Hydraulikzylinderblocks aus der Kupplungsvorrichtung gemäß Fig. 1 bis Fig. 6,
Fig. 8 eine Ansicht von oben eines alternativen Ausführungsbeispiels einer erfindungsgemäßen Kupplungsvorrichtung, und
Fig. 9 ein Schaltbild einer Steuerung für eine erfindungsgemäße Kupplungsvorrichtung.

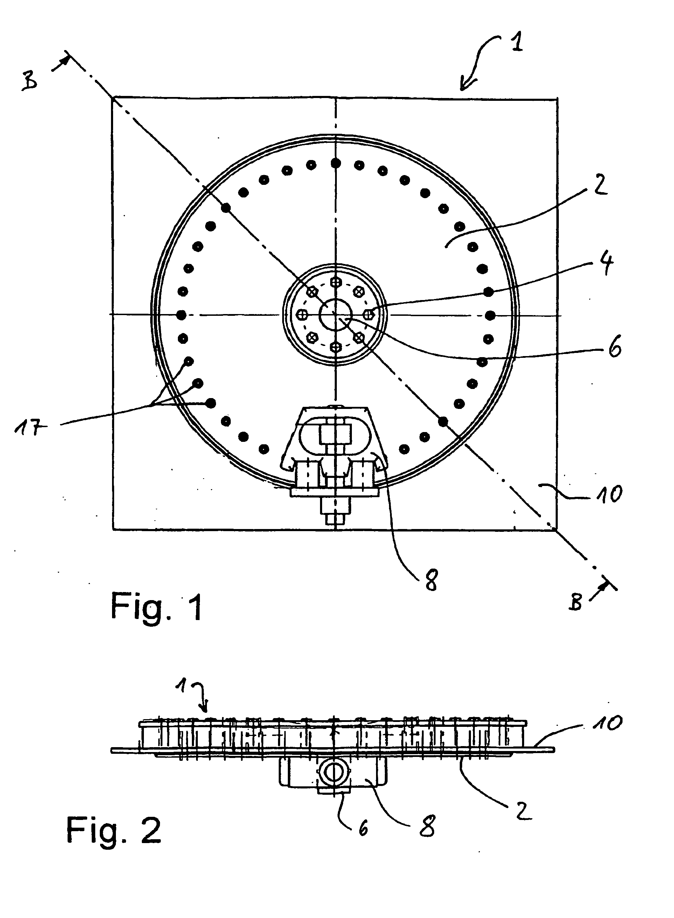

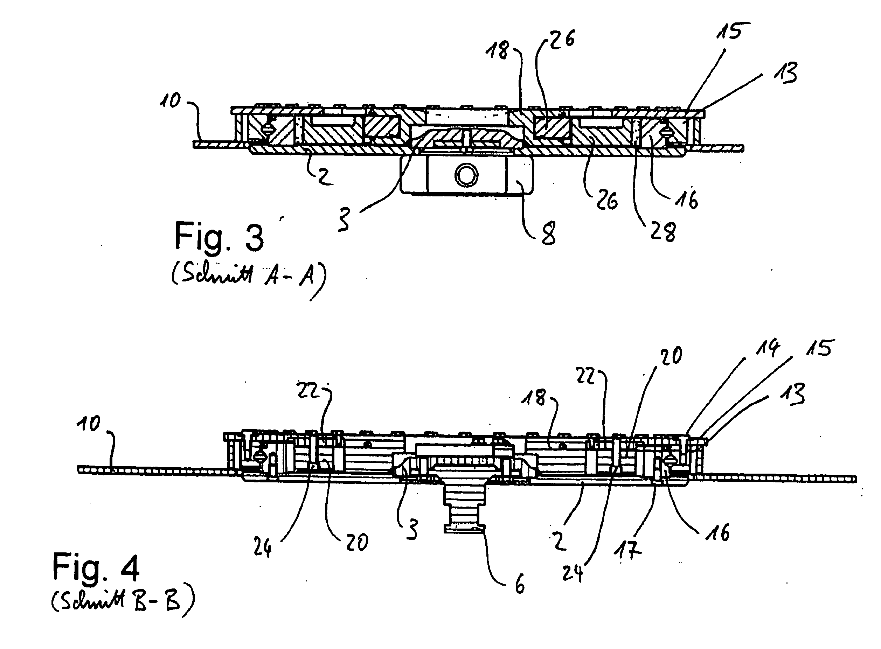

Die Fig. 1 bis Fig. 6 zeigen ein Ausführungsbeispiel der Erfindung und dienen dazu, Aufbau und Funktion einer erfindungsgemäßen Kupplungsvorrichtung 1 zu erläutern.

Richtungsangaben wie vorne, hinten, oben, unten, rechts und links gelten für den Einbauzustand der Kupplungsvorrichtung in einem Fahrzeug bzw. einem Fahrzeugabschnitt und sind aus der Sicht des in Fahrtrichtung sitzenden Fahrzeugführers angegeben.

Die in Fig. 1 dargestellte Unterseite der Kupplungsvorrichtung 1 zeigt die Unterseite des Drchtcllcrs 2, an dem drehfest über Schrauben 4 der Königszapfen ("king pin") 6 fixiert ist. Weiterhin ist mit dem Drehteller 2 ein Lenkkeil 8 verbunden. Der Drehteller 2 sitzt drehbar gelagert im Trägertopf 10, der beispielsweise an einem Sattelauflieger befestigt (zum Beispiel verschweißt) ist. Der Drchteller 2 wird über den Königszapfen 6 in der Aufnahme einer am Fahrzeug angeordneten Kupplungsplatte verriegelt und überträgt alle horizontal wirkenden Lasten zwischen Fahrzeug und Auflieger. Über den Lenkkeil 8 ist der Drehteller 2 drehfest mit der Kupplungsplatte einer Zugmaschine (beide nicht dargestellt) koppelbar. Dazu sitzt der Lenkkeil 8 in einer entsprechenden Ausnehmung am hinteren Ende der Kupplungsplatte, durch das zum Ein- bzw. Abkuppeln der Königszapfen 6 eingeführt bzw. ausgeführt werden kann. Die Unterseite des Drehtellers 2 licgt dabei flach auf der nach oben weisenden Gegenfläche der Kupplungsplatte. Im Gegensatz zu normalen Sattelaufliegerfahrzeugen findet bei der dargestellten Kupplungsvorrichtung 1 die Drehung zwischen Auflieger und Zugmaschine nicht zwischen Drehteller 2 und Kupplungsplatte statt (bei Kurvenfahrten oder beim Rangieren), sondern zwischen Drehteller 2 und Trägerkopf 10, da der Lenkkeil 8 eine Relativbewegung zwischen Drehteller 2 und der Kupplungsplatte am Fahrzeug verhindert.

Die Lagerung zwischen Drehteller 2 und Trägerkopf 10 erfolgt über einen Drehkranz 12, der als Wälzlager ausgebildet ist und sowohl die in horizontaler Richtung wirkenden Zugkräfte aufnimmt als auch die in vertikaler Richtung wirkenden Stützkräfte zwischen Auflieger und Zugmaschine übertragen kann. Dazu ist der Außenring 13 des Drehkranzes 12 über Schrauben 14 im Deckflansch 15 des Trägcrtopfs 10 fixiert, und der Innenring 16 über Schrauben 17 im Drehteller 2. Bei Kurvenfahrten oder im Rangierbetrieb können sich so die Fahrzeugabschnitte Zugmaschine und Auflieger entsprechend zueinander verschwenken, indem Drehteller 2 und Trägerkopf 10 über den Drehkranz 12 gegeneinander verdreht werden.

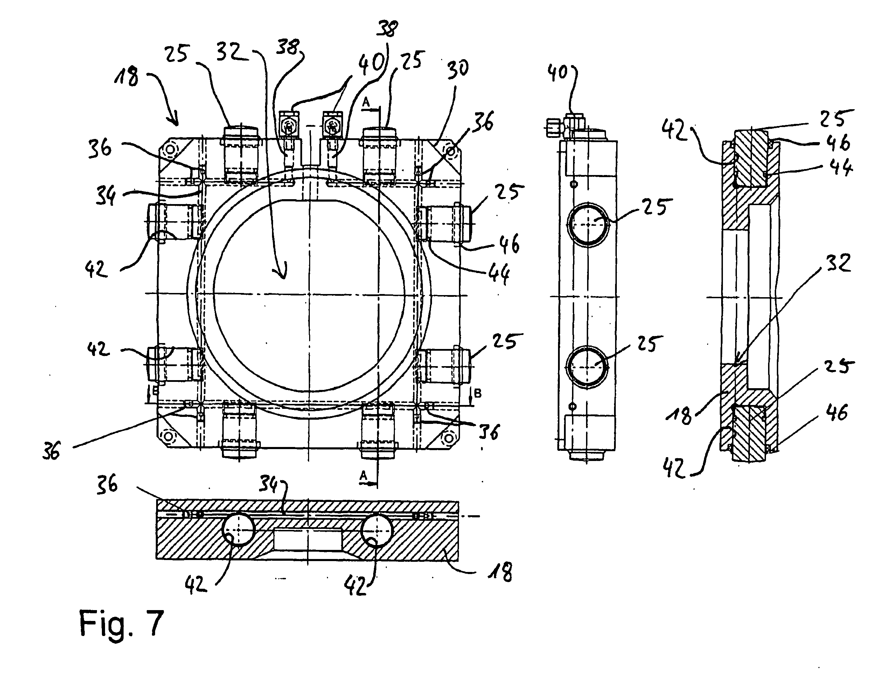

Um diese Drehbewegung zu hemmen bzw. zu bremsen, ist folgendes vorgesehen: Im Innern des Trägerkopfs 10 ist ein Hydraulikblock 18 fixiert (siehe auch Fig. 7). Die Befestigung erfolgt kraftschlüssig über vier Anschläge 20, die jeweils über Passfedern 22 und Schrauben 24 im Dcckflansch 15 fixiert sind. Über die Hydraulikkolben 25 wirkt der Hydraulikblock 18 auf radial nach außen wirkende Bremsblöcke 26, die an ihren radialen Außenflächen Bremsbeläge 28 aufweisen.

Beim Verschwenken der beiden Fahrzeugabschnitte zueinander in ungebremstem Zustand verdrehen sich der Drehteller 2 zusammen mit dem Innenring 16 des Drehkranzes 12 relativ zu den Bremsblöcken 26 des Hydraulikblockes 18, der am Trägertopf 10 fixiert ist. Beim Bremsen drückcn die Kolben 25 die Bremsblöcke 26 radial nach außen. Die Bremsbeläge 28 greifen an den inneren Umfangsflächen des Innenrings 16 an und hemmen entsprechend der über die Kolben 25 aufgebrachtcn Radialkraft die Drehbewegung. Die auftretenden Kräfte werden dabei über die Bremsblöcke 26, die mit ihren Flanken 29 an den entsprechenden Seitenflächen 27 der Anschläge 20 anliegen, in die Anschläge 20 übertragen und dort über die Schrauben 24 bzw. über die Passfedern 22 in den Deckflansch 15 und damit in den Trägertopf 10 bzw. in den Sattelauflieger eingeleitet. Die an sich drehgelenkige Lagerung wird versteift. Neben der Lasteinleitung in den Deckflansch 15 haben die Passfedern 22 noch die Funktion, mit ihren nach innen weisenden Stirnflächen den Hydraulikblock 18 an seinen abgeschrägten Eckbereichen 30 in der Kupplungsvorrichtung zu zentrieren.

Beim dargestellten Ausführungsbeispiel beträgt das maximale Bremsmoment bis zu ca. 70.000 Nm und der Druck im Hydrauliksystem beträgt dabei ca. 420 bar.

Der Hydraulikblock 18 (Fig. 7) hat eine im wesentlichen quadratische Grundfläche und ist in der Mitte ausgenommen (Öffnung 32). Über diese Öffnung 32 kann er platzsparend den zur Fixierung des Königszapfens am Drehteller 2 vorgesehenen Befestigungssockel 3 aufnehmen. Der Hydraulikblock 18 weist im Innern einen ringförmigen Hydraulikkanal 34 auf, der über mehrere einander kreuzende Durchgangs- und Sackbohrungen ausgebildet ist. Die entsprechenden offenen Enden dieser Bohrungen sind mit Dichtstopfen 36 verschlossen. Zwei Zugangsbohrungen 38 verbinden den Hydraulikkanal 34 mit entsprechenden Anschlüssen 40.

Der Hydraulikkanal 34 verläuft im oberen Bereich des Hydraulikblocks 18 und schneidet jeweils den Bodenbereich der zylindrischen Ausnehmungen 42, in denen die Druckkolben 25 wirken. Der Hydraulikkanal 34 schneidet die zylindrischen Ausnehmungen 42 jeweils im hinteren (inneren) und oberen Bereich so an, dass er jeweils den höchsten Punkt im Hydrauliksystem des Hydraulikblocks 18 bildet. Diese Anordnung ermöglicht eine sichere und zuverlässige Befüllung und Entlüftung des Hydrauliksystems im Hydraulikblock 18 vor der Inbetriebnahme. Die Druckkolben 25 sind über entsprechende Dichtungen 44 und Abstreifer 46 in ihren Ausnehmungen 42 geführt und eingedichtet.

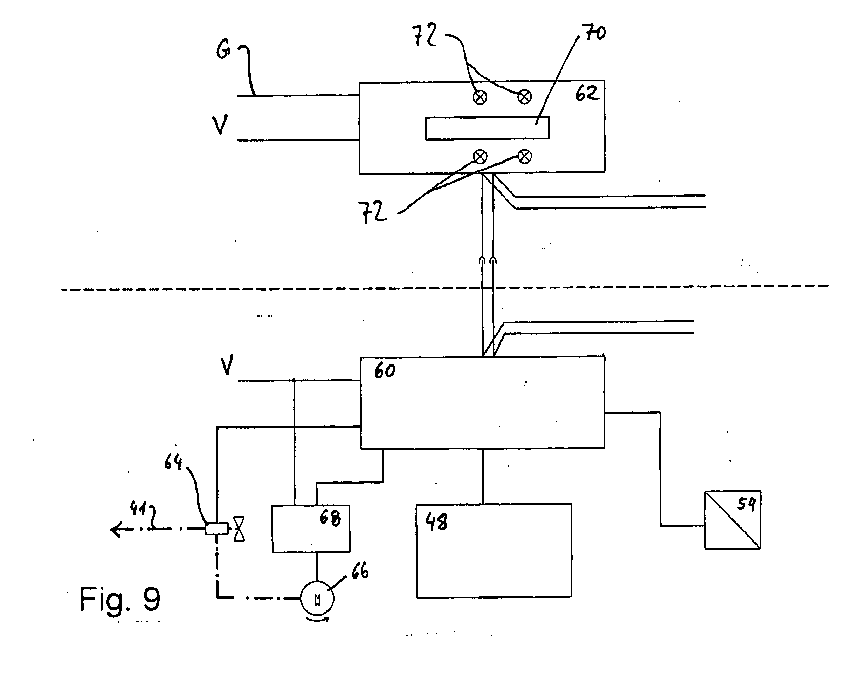

Die Anschlüsse 40 sind mit Hydraulikleitungen 41 verbunden, die mit entsprechenden Aggregaten 64, 66 (Fig. 9) verbunden sind bzw. zur Entlüftung des Hydraulikblocks 18 dienen.

Die in den Fig. 1 bis Fig. 6 dargestellte Kupplungsvorrichtung weist einen Hydraulikblock gcmäß Fig. 7 auf, die auf vier Bremsblöcke 26 über jeweils zwei Kolben 25 wirkt.

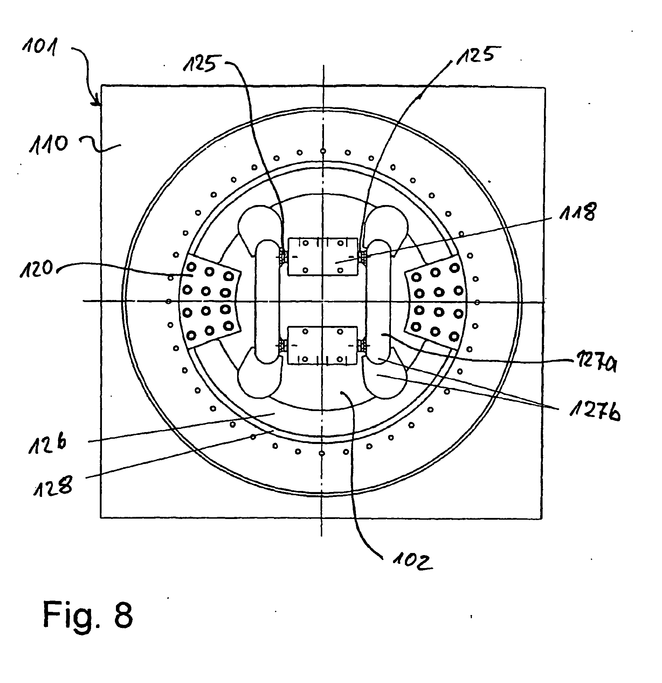

Fig. 8 zeigt eine Kupplungsvorrichtung 101, bei der zwei Hydraulikblöcke 118 vorgesehen sind, die jeweils über in entgegengesetzte Richtungen wirkende Hydraulikkolben 125 auf Traversen 127a wirken, die wiederum über die Bremskraft übersetzende Hebelnocken 127b auf Bremsblöcke 126 und Bremsbeläge 128 wirken. Auch hier werden die über die Bremsbeläge 128 und Bremsblöckc 126 aufgenommenen Umfangslasten über entsprechende Anschläge 120 in den Trägertopf 110 eingeleitet. Neben dieser Ausführung mit zwei getrennten Hydraulikblöcken 118 lässt sich das gleiche Prinzip (Hebelübersetzung) auch mit einem einzigen Hydraulikblock (siehe Fig. 1-Fig. 7) realisieren.

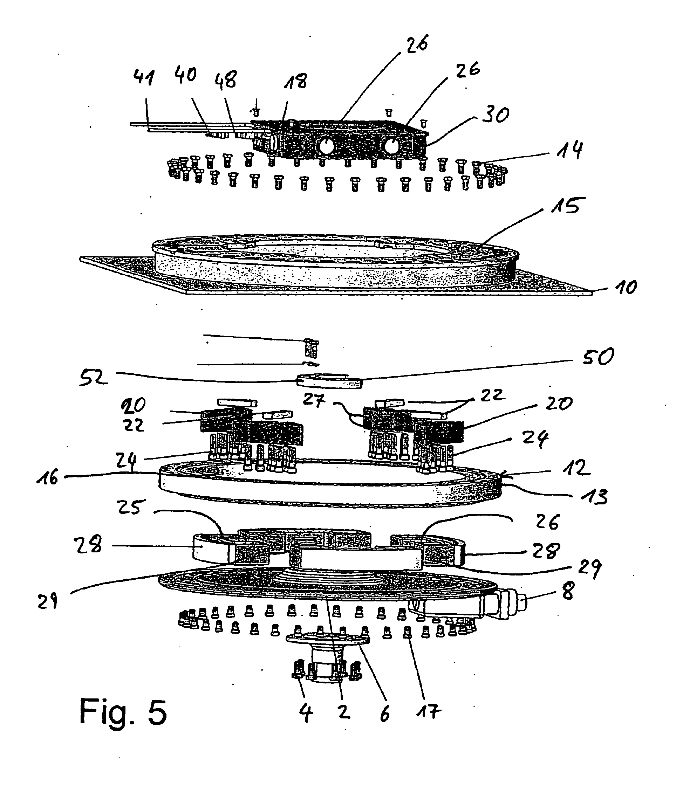

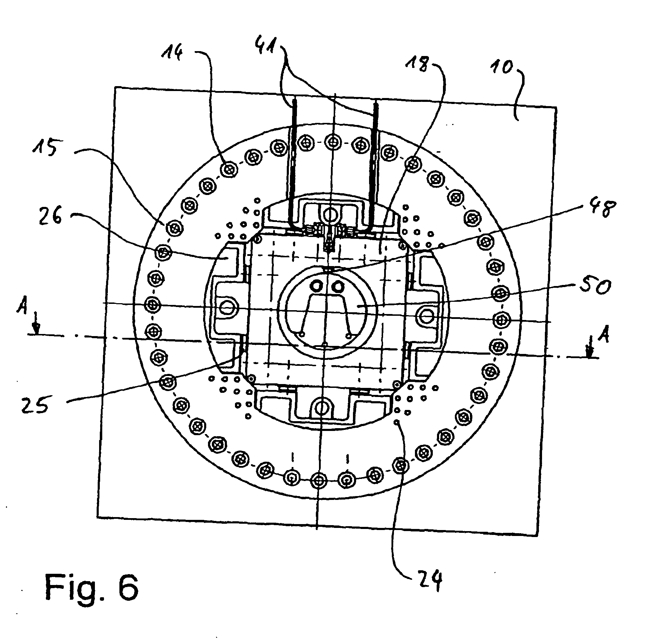

In vielen Fällen soll die Bremswirkung drehwinkelabhängig gesteuert werden. Das heisst, die Bremswirkung soll mit zunehmendem Verdrehwinkel zwischen Drehteller 2 und Trägcrkopf 10, also mit zunehmendem Verschwenken der entsprechenden Fahrzeugabschnitte zueinander verstärkt werden. Dazu ist bei dem in den Fig. 1 bis Fig. 6 beschriebenen Ausführungsbeispiel ein analoger Wegsensor 48 mit einem Exzenter 50 kombiniert (siehe Fig. 5 und Fig. 6). Der Exzenter 50 ist dabei mit dem Drehteller 2 gekoppelt und der Wegsensor 48 mit dem Hydraulikblock 18. Zwischen dem Mcßkopf des Wegsensors 48 und dem Exzenter 50 ist ein Spalt, der durch die dem Wegsensor 48 zugewandte Umfangsfläche 52 definiert wird. Der Umfangsflächenverlauf ist so gewählt, dass sich beim Verdrehen des Exzenters 50 relativ zum Wegsensor 48 die Spaltbreite verändert. Diese Änderung der Spaltgeometric erfasst der Wegsensor 48. Das entsprechende Signal rechnet eine Steuerung 60 (Fig. 9) in eine entsprechende Schwenk- bzw. Drehwinkeländer ung der entsprechenden Fahrzeugabschnitte zueinander um, und steuert bzw. regelt den auf die Druckkolben 25 wirkenden Druck entsprechend; hier über ein Servoventil 64 und/oder eine Hydraulikpumpe 66.

Eine entsprechende Steuerung zeigt Fig. 9.

Hier ist die Steuerung 60 über einen sogenannten CAN-Bus mit einem Anzeige-/Bedienungsgerät 62 verbunden. Die Steuerung 60 ist mit dem Wegsensor 48 (Schwenkwinkel) verbunden und mit einem Drucksensor 54, der den Druck im Hydrauliksystem (Hydraulikkanal 34, Hydraulikleitung 41) erfasst. Eine Stromversorgung V versorgt das Anzeige-/Bediengerät 62 und die Steuerung 60 mit einer Versorgungsspannung von 10 bis 32 Volt. Die Steuerung 60 ist ebenfalls mit einem Druckregelventil 64 verbunden, das den Versorgungsdruck in der Hydraulikleitung 41 steuert und über den Hydraulikmotor 66 mit Hydraulikflüssigkeit versorgt wird und diese dem Hydraulikblock 18 zuführt. Der Hydraulikmotor 66 wird über einen Leistungsschalter 68 ebenfalls von der Steuerung 60 angesteuert. Neben den Drehwinkelsignalen aus dem Sensor 48 und den Drucksignalen vom Drucksensor 54 kann die Steuerung auch über den CAN-Bus weitere verfügbare Signale aufnehmen, die beispielsweise über die Leitung G an das Anzeige-/Bedienungsgerät geliefert werden. Das Anzeige-/Bedienungsgerät 62 verfügt über eine Anzeige 70, die beispielsweise den Schwenkwinkel zwischen den Kupplungselementen bzw. den Fahrzeugabschnitten anzeigt. Weiterhin können verschiedene Bedienelemente 72 vorgesehen sein, um unterschiedliche Betriebszustände abzufragen bzw. einzustellen. Neben dem angegebenen CAN-Bus können auch andere Feldbusverbindungen realisiert sein (zum Beispiel CANopen, DeviceNet, J1939, CLe ANopen, LIN-Bus, K-Bus, KWP2000). Der hier verwendete Begriff Steuerung ist nicht auf eine Steuerung im klassischen Sinne beschränkt, sondern soll auch Regeleinrichtungen umfassen, bei denen die Ausgangsgrösse Bremskraft bzw. Hydraulikdruck über einen oder mehrere Regelkreise eingestellt werden kann (neben den bereits angegebenen Regelgrößen wie Schwenk-/Drehwinkel,. Geschwindigkeit und Druck können auch Größen wie Fahrzeuggewicht, Ladegewicht, Bremswirkung der Fahrzeugbremsen oder ähnliches einzeln oder in Kombination berücksichtigt werden.

Neben dem oben dargestellten Ausführungsbeispiel, bei dem die Kupplungseinrichtung über den Königszapfen 6 mit der Kupplungsplatte an einer Zugmaschine gekoppelt wird, gibt es auch Ausführungen, bei denen der Drehteller 2 direkt mit einem Fahrzeugabschnitt verbunden (z. B. verschraubt, verschweißt) ist. Solche Ausführungen sind für Gelenkbusse, LKW-Anhänger und mehrgliedrige Schienenfahrzeuge (Straßenbahnen) geeignet.

Weitere Variationen und Ausführungen der Erfindung ergeben sich für den Fachmann im Rahmen der nachfolgenden Ansprüche.

## Patentansprüche

1. Kupplungsvorrichtung (1) zur drehgelenkigen Kopplung von zwei Fahrzeugabschnitten mit schwenkbar zueinander angeordneten Kupplungselementen (2, 10), die jeweils fest mit einem Fahrzcugabschnitt koppelbar sind, und
einer zwischen den Kupplungselementen (2, 10) wirkenden Bremsanordnung (12, 16, 18, 25, 26, 28; 12, 118, 125, 127a, 127b, 126, 128) zur Herstellung eines einstellbaren Reibschlusses zwischen den Kupplungselementen (2, 10), der die Schwenkbarkeit der Fahrzeugabschnitte zueinander hemmt,
**dadurch gekennzeichnet, daß** die Bremsvorrichtung (12, 16, 18, 25, 26, 28; 12, 118, 125, 127a, 127b, 126, 128) eine einzige Hydraulikzylindereinheit (18; 118) umfasst, welche auf mehrere radial wirkende Bremsclemente (26, 28; 126, 128) wirkt und
die Kupplungsvorrichtung (1) zusätzlich eine Steuerung zum Steuern/Regeln des Reibschlusses zwischen den Kupplungselementen (2, 10; 102, 110) über den in der Hydraulikzylindereinheit (18; 118) wirkenden Arbeitsdruck aufweist, wobei die Steuerung (60) so ausgebildet ist, dass sie den Arbeitsdruck auf der Grundlage wenigstens einer der folgenden erfassten Steuer-/Regelgrössen einstellt: Fahrzeuggeschwindigkeit, Schwenkwinkel zwischen Fahrzeugabschnitten, Fahrzeuggewicht, Lenkeinschlag, Bremswirkung Fahrzeugbremse.

2. Kupplungsvorrichtung (1) nach Anspruch 1, bei welcher jedes der Bremselemente (28, 128) über mehrere Zylinder-/Kolbenelemente (25; 125) angetrieben wird.

3. Kupplungsvorrichtung (1) nach Anspruch 1 oder 2, bei welcher die Hydraulikzylindereinheit (18; 118) einen Zufuhranschluss (40) für Hydraulikflüssigkeit, eine Verteilerleitung (34) und mehrere Zylinderhohlräume (42) zur Aufnahme der Hydraulikkolben (25; 125) aufweist.

4. Kupplungsvorrichtung (1) nach Anspruch 1, 2 oder 3, bei welcher die Hydraulikzylindereinheit (18; 118) einstückig ausgebildet ist.

5. Kupplungsvorrichtung (1) nach einem der Ansprüche 1 bis 4, bei welcher vier senkrecht zueinander wirkende Bremselemente (26, 28) vorgesehen sind, welche jeweils über wenigstens zwei Zylinder-/Kolbenelemente (25) angetrieben werden.

6. Kupplungsvorrichtung (1) nach einem der Ansprüche 1 bis 5, bei welcher zwischen den Zylinder-/Kolbenelementen (125) und den Bremselementen (126, 128) kraftverstärkende Koppelgetriebe (127a, 127b) vorgeschen sind.

7. Kupplungsvorrichtung (1) nach Anspruch 6, bei welcher die Getriebe als Koppelhebel (127b) ausgeführt sind, welche jeweils gelenkig an einem Zylinder-/Kolbenelement (125, 127a) und einem Bremselement (126) angelenkt sind.

8. Kupplungsvorrichtung (1) nach einem der vorhergehenden Anspruch, bei welcher ein Kupplungsclement (2; 102) übcr eine Keilanordnung (8) drehfest mit einer Sattelplatte eines Fahrzeugabschnitts koppelbar ist.

9. Kupplungsvorrichtung (1) nach einem der vorhergehenden Ansprüche, bei welcher ein oder mchrere Sensoren (48, 54) vorgesehen sind zum Erfassen wenigstens einer der folgenden Betriebsgrössen des Fahrzeugs: Fahrzeuggeschwindigkeit, Schwenkwinkel zwischen Fahrzeugabschnitten, Fahrzeuggewicht, Lenkeinschlag, Bremswirkung Fahrzeugbremse.

10. Kupplungsvorrichtung (1) nach Anspruch 9, bei welcher die Steuerung über einen CAN-Bus mit einer Anzeigeeinrichtung (62, 70) und/oder einer Bedienungseinrichtung (62, 72) koppelbar ist.

11. Fahrzeug, insbesondere ein LKW, ein Bus, oder ein Schienenfahrzeug, mit einer Kupplungsvorrichtung (1; 101) nach einem der vorhergehenden Anspruch.

## Claims

1. A coupling apparatus (1) for a turnable linkage of two motor vehicle sections comprising
mutually pivotal coupling elements (2, 10), wherewith each coupling element (2,10) can be affixed to one of the motor vehicle sections respectively; and
a brake arrangement (12, 16, 18, 25, 26, 28; 12, 118, 125, 127a, 127b, 126, 128) acting between the coupling elements ( 2,10), for the establishment of an adjustable frictional union between the coupling elements (2, 10), which restrains a mutual slewing of the two motor vehicle sections,
**characterized in that**:
the brake arrangement (12, 16, 18, 25, 26, 28; 12, 118, 125, 127a, 127b, 126, 128) includes a single hydraulic cylinder unit (18; 118), which acts upon a plurality of radially functioning braking elements (26, 28; 126, 128) and
the coupling apparatus (1) possesses additionally a control for the control and regulation of a frictionally activated union between the coupling elements (2, 10; 102, 110) by the acting hydraulic pressure in the hydraulic cylinder unit (18; 118), whereby the control (60) is so designed, that it adjusts the operational hydraulic pressure exerted on the basis of at least one of the following control or regulation values: vehicle road speed, slewing angle between the motor vehicle sections, maximum steering lock, brake operation, and vehicle braking.

2. A coupling apparatus (1) in accord with claim 1, wherein each of the brake elements (28, 128) is driven by a plurality of cylinder-piston (25; 125) elements.

3. A coupling apparatus (1) in accord with claim 1 or 2, wherein the hydraulic cylinder block (18; 118) possesses a feed fitting (40) for hydraulic fluid, a distribution line system (34) and a plurality of cylindrical spaces (42) for the reception of hydraulically activated pistons (25; 125).

4. A coupling apparatus (1) in accord with claim 1, 2 or 3, wherein the hydraulic cylinder block (18; 118) is made as a one-piece object.

5. A coupling apparatus (1) in accord with one of the claims 1 to 4 wherein four brake elements (26, 28) functioning at right angles to one another are provided, which are respectively activated by at least two cylinder-piston elements (25).

6. A coupling apparatus (1) in accord with one of the foregoing claims 1 to 5, wherein between the cylinder-piston elements (125) and the brake elements (126, 128) force-increasing coupling drives (127a, 127b) are provided.

7. A coupling apparatus (1) in accord with claim 6, wherein the drive is designed as a cam (127b), which, is respectively linked to a cylinder-piston element (125, 127a) and a brake element (126).

8. A coupling apparatus (1) in accord with one of the foregoing claims, wherein a coupling element (2; 102) is turn-fast affixed with a saddle plate of one motor vehicle section by a steering wedge (8).

9. A coupling apparatus (1) in accord with one of the foregoing claims, wherein one or more sensors (48, 54) are provided for the determination of at least one of the following operational values related to the vehicle: vehicle road speed, slewing angle between the vehicle sections, weight of vehicle, maximum steering lock, and braking.

10. A coupling apparatus (1) in accord with claim 9, wherein the control, by a CAN-Bus can be in communication with a display apparatus (62, 70) and/or with a service apparatus (62, 72).

11. A vehicle, especially a truck, a bus, or a rail mounted train car which is provided with a coupling apparatus (1; 101) following one of the foregoing claims.

## Revendications

1. Dispositif d'accouplement (1) pour l'accouplement à articulation rotative de deux parties de véhicule
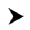 avec des éléments d'accouplement (2, 10) disposés de manière pivotante l'un par rapport à l'autre qui peuvent être accouplés respectivement fixement à une partie de véhicule, et
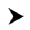 un ensemble de freins (12, 16, 18, 25, 26, 28 ; 12, 118, 125, 127a, 127b, 126, 128) agissant entre les éléments d'accouplement (2, 10) pour l'établissement d'une friction réglable entre les éléments d'accouplement (2, 10) qui bloque la possibilité de faire pivoter les parties de véhicule l'une par rapport à l'autre,
**caractérisé en ce que** le dispositif de freinage (12, 16, 18, 25, 26, 28 ; 12, 118, 125, 127a, 127b, 126, 128) comporte une seule unité de vérin hydraulique (18 ; 118) qui agit sur plusieurs éléments de freinage (26, 28 ; 126, 128) agissant radialement et
le dispositif d'accouplement (1) présente en outre une commande (60) pour la commande/ régulation de la friction entre les éléments d'accouplement (2, 10 ; 102, 110) par la pression de travail agissant dans l'unité de vérin hydraulique (18 ; 118), la commande (60) étant réalisée de sorte qu'elle règle la pression de travail sur la base d'au moins l'une des grandeurs de commande/de réglage détectées suivantes : vitesse de véhicule, angle de pivotement entre des parties de véhicule, poids de véhicule, butée de direction, effet de freinage frein de véhicule.

2. Dispositif d'accouplement (1) selon la revendication 1, pour lequel chacun des éléments de freinage (28, 128) est entraîné par plusieurs éléments à piston et cylindre (25 ; 125).

3. Dispositif d'accouplement (1) selon la revendication 1 ou 2, pour lequel l'unité de vérin hydraulique (18 ; 118) présente un raccordement d'alimentation (40) pour du liquide hydraulique, une conduite de distribution (34) et plusieurs espaces creux cylindriques (42) pour le logement des pistons hydrauliques (25 ; 125).

4. Dispositif d'accouplement (1) selon la revendication 1, 2 ou 3, pour lequel l'unité de vérin hydraulique (18 ; 118) est réalisée d'un seul tenant.

5. Dispositif d'accouplement (1) selon l'une quelconque des revendications 1 à 4, pour lequel quatre éléments de freinage (26, 28) agissant perpendiculairement les uns aux autres sont prévus, lesquels sont entraînés respectivement par au moins deux éléments à piston et cylindre (25).

6. Dispositif d'accouplement (1) selon l'une quelconque des revendications 1 à 5, pour lequel des engrenages couplés (127a, 127b) à amplification de puissance sont prévus entre les éléments à piston et cylindre (125) et les éléments de freinage (127a, 127b).

7. Dispositif d'accouplement (1) selon la revendication 6, pour lequel les engrenages sont réalisés comme des leviers d'accouplement (127b) qui sont articulés respectivement de manière articulée à un élément à piston et cylindre (125, 127a) et à un élément de freinage (126).

8. Dispositif d'accouplement (1) selon l'une quelconque des revendications précédentes, pour lequel un élément d'accouplement (2 ; 102) peut être accouplé par un ensemble de clavette (8) de manière fixe à rotation à une plaque à collerette d'une partie de véhicule.

9. Dispositif d'accouplement (1) selon l'une quelconque des revendications pour lequel un ou plusieurs capteurs (48, 54) sont prévus pour la détection d'au moins l'une des grandeurs de fonctionnement suivantes du véhicule : « vitesse de véhicule, angle de pivotement entre des parties de véhicule, poids de véhicule, butée de direction, effet de freinage frein de véhicule.

10. Dispositif d'accouplement (1) selon la revendication 9, pour lequel la commande peut être accouplée par un bus CAN à un dispositif d'affichage (62, 70) et/ou à un dispositif de commande (62, 72).

11. Véhicule, en particulier camion, bus ou véhicule sur rails avec un dispositif d'accouplement (1 ; 101) selon l'une quelconque des revendications précédentes.
